# EUROPEAN PATENT APPLICATION

(11) **EP 4 737 167 A1**
(43) Date of publication of application: **06.05.2026**
(21) Application number: 24383194.8
(22) Date of filing: 31.10.2024
(51) Int. Cl.: B60K 6/48, B60K 6/547, B60W 20/11, B60W 20/30, B60W 20/40, B60W 50/00

(54) **METHOD FOR SMOOTHING THE CHANGE FROM AN ELECTRIC TRACTION MODE TO A HYBRID TRACTION MODE IN A HYBRID VEHICLE**

(71) Applicant: Horse Powertrain Solutions, S.L.U., 28108 Alcobendas (Madrid) (ES)
(72) Inventor: KEMPSKI, Paul, Lardy 91510 (FR); JOUSSET, Corentin, Lardy 91510 (FR)
(74) Representative: Elzaburu S.L.P.

(57) **Abstract**

Method for smoothing the change from an electric traction mode to a hybrid traction mode in a hybrid vehicle, comprising the steps of: receiving traction mode information (S1) evaluating (S2) the convenience of changing to a first hybrid traction mode (Hₓ) by measuring current values of predefined operating parameters; evaluating (S3) the convenience of shifting -within a predefined lapse of time- to a second hybrid powertrain (Hₓ₊₁) corresponding to a higher speed range, and if so, calculating the remaining time (T) for changing to the second hybrid powertrain (Hₓ₊₁); and modifying the energy management law (LGE) for making the gearbox control unit change directly from the electric powertrain (EVₓ) to the second hybrid powertrain (Hₓ₊₁), once said remaining time (T) has lapsed.

## Description

### Technical field

The present invention belongs to the automotive technical field, and more particularly to the area of traction management of hybrid vehicles, such as, for example and without being limitative, hybrid cars, vans, trucks and buses.

Thus, a first object of this invention is a method for smoothing the change from an electric traction mode to a hybrid traction mode, in a hybrid vehicle, which can avoid quick and unpleasant changes between different reducer gears responsible for the connection of the combustion engine to, at least, one tractor wheel.

The present invention also refers to a computer readable storage medium comprising instructions which, when executed in a computer, cause the computer to carry out the abovementioned change smoothing, and to a traction management unit for a hybrid vehicle comprising programmable logic means capable of performing said change smoothing method.

### Background of the invention

Hybrid vehicles are generally provided with a combustion engine and at least one electric drive machine, jointly forming a so-called hybrid engine, which is connected -at least- to one tractor wheel of the vehicle through a plurality of reducer gears. Examples of these hybrid engines are disclosed, among other documents, in document FR3022495 corresponding to patent application FR1455850 filed by Renault SAS, which describes hybrid engines having one combustion engine and two electric drive machines.

Several different traction modes could be adopted by the hybrid engine during its operation, and particularly:
- a hybrid traction mode, in which the combustion engine is connected to the tractor wheel(s) through a first hybrid-thermal reducer gear, according to a first transmission ratio and at least one electric drive machine is connected to the tractor wheel(s), through a first electric reducer gear according to a second transmission ratio;
- an electric traction mode, in which the electric drive machine is connected to the tractor wheel(s) through the first electric reducer gear, according to a third transmission ratio; and
- a thermal traction mode, in which only the combustion engine is connected to the tractor wheel(s) through the first hybrid-thermal reducer gear, according to a fourth transmission ratio.

The first two traction modes listed above (i.e. the hybrid traction mode and the electric traction mode) contribute to reducing fuel consumption of the combustion engine.

More particularly, during the hybrid traction mode, the combustion engine and at least one electric drive machine ensure the traction of the vehicle with parallel operation of these components via the corresponding reducer gears. Consequently, multiple transmission ratios between the corresponding elements which make up the powertrain, could be chosen during the hybrid traction mode.

On the other hand, during the electric traction mode, the required vehicle traction is achieved only by means of the electric drive machine(s), thus allowing the combustion engine to be unused and therefore switched off.

In order to manage hybrid or electric traction state change requests, most of the traction management systems which are currently employed by hybrid vehicles, make the corresponding decisions based on a function generally known as "Energy Management Law" (LGE, French acronym for "Loi de Gestion de I'Energie"). The LGE has, among others, the role of optimizing the vehicle's consumption and to that end, it creates an optimal classification (by means of a score or ranking), intended to favor certain hybrid or electric traction modes among all the existing ones, in order to define a final target powertrain for the operation of the vehicle.

Throughout the present description, it should be understood that the expression "powertrain" refers to the arrangement of all the mechanical elements (heat engine's crankshaft, drive shafts, transfer shafts, reducer gears, etc.) required for generating a particular traction mode of the electric vehicle. Letter "H" will be used for hybrid powertrains (that is, powertrains implementing hybrid traction modes), "Th" will be used for thermal powertrains (i.e., powertrains implementing thermal traction modes) and "EV" for electric powertrains (powertrains implementing electric traction modes).

The optimal classification employed by current traction management systems is usually based, among others, on the following criteria:
- compliance with certain pleasure constraints, such as, for example: NVH (acronym of "noise, vibration and harshness"), and thermal comfort;
- the so called "driver's will", i.e., the desired target torque at the wheels, which is obtained, for example, from stepping on the accelerator with a certain intensity causing the pedal to move to a certain position within its stroke; and
- the current state of energy in the electric battery and the energy target of said battery.

Said ranking is calculated instantaneously and therefore, this implies that it must be continuously re-evaluated by the traction management system until the optimal traction mode for that moment is found. Then, the traction management system sends the corresponding instructions, so that the corresponding powertrain is chosen, allowing the hybrid vehicle to operate according to said optimal traction mode.

In some situations, the ranking may favor a hybrid traction mode over an electric traction mode, for energy consumption reasons. In the particular case of driving within an urban environment and in which the vehicle accelerates gently (with the driver's exerting a light pressure on the accelerator pedal), this could result in turning the combustion engine on, with a first hybrid-thermal gear (which makes part of a first hybrid powertrain) being engaged only for a few seconds, before being replaced very quickly afterwards for another higher hybrid-thermal gear (which makes part of a second hybrid powertrain), to reach the speed target of the urban speed limit (for example, 50 km/h).

These two very close hybrid-thermal gear changes could be considered undesirable from a customer point of view: a loss in the feeling of comfort could be indeed perceived, caused by the fact that the combustion engine starts at a medium or high speed (therefore implying rotational noise and vibrations/shocks) to go to another hybrid traction mode at lower rpm and therefore quieter, with less vibration, added to the fact that the customer will have perceived two consecutive changes in the hybrid powertrain, which can cause a misunderstanding of the vehicle's operation from the customer's point of view.

Various methods and systems for controlling the traction of hybrid and other types of vehicles, vehicles are already known.

Thus, for example, document US20230166717, describes a system for controlling the connection of an internal combustion engine capable of inhibiting its hybrid powertrain, if certain conditions of vehicle are met, such as, speed and braking thresholds, but especially torque thresholds (interpretation of the driver's will). Nevertheless, the invention disclosed therein does not take energy optimization of the hybrid powertrain into consideration and merely applies a heuristic law of determination of the change of the series / hybrid powertrains with combustion engine coupled to the wheels. Moreover, his invention does not address the problem of avoiding abrupt gear changes in hybrid applications of the combustion engine.

Document EP3803160 discloses a traction management method which, during a gear change, is capable of modifying the first target powertrain if the first target chosen (which initiated the change) is no longer suitable for various reasons, such as vehicle speed and/or acceleration required by the driver's will. Nevertheless, the purpose of the invention disclosed therein is to intervene during a change in the powertrain if the initial target is no longer suitable, and it is not intended to prevent abrupt gear changes.

On the other hand, document US8880255 discloses a method for making powertrain changes based on the controlled energy costs associated with each possible change and selecting the one having the lowest possible energy cost. The invention disclosed therein evokes a form of mapping the matrix of ratio changes in a nominal operation and does not address the problem of preventing abrupt gear changes.

In view of all the above, still there is a need to develop a method for changing from an electric traction mode to a hybrid traction mode of a hybrid vehicle which is capable of avoiding unpleasant quick gears changes.

### Summary of the invention

With the aim of providing a solution to the abovementioned problems, a first object of the present invention refers to a method for smoothing the change from an electric traction mode to a hybrid traction mode in a hybrid vehicle provided with a gearbox control unit, the gearbox control unit being arranged for selecting a target powertrain for each instant, according to a predefined energy management law which assigns a score to each powertrain of the hybrid vehicle for each instant, the method being characterized in that it comprises the steps of:
a) receiving the current engaged powertrain of the hybrid vehicle;
b) if the current engaged powertrain corresponds to a hybrid traction mode, then let the gearbox control unit act according to the predefined energy management law and conversely, if the current engaged powertrain corresponds to an electric mode, then evaluating the convenience of changing to an hybrid traction mode associated to a first hybrid powertrain, by measuring current values of predefined operating parameters of the hybrid vehicle and comparing them with a first set of predefined reference ranges;
c) if at least one of said measured values is outside the first set of predefined reference ranges, then let the gearbox control unit act according to the predefined energy management law and conversely, if all measured values are within the first set of predefined reference ranges, then evaluating the convenience of shifting -within a predetermined time interval- to a second hybrid powertrain, corresponding to a higher speed range than the first hybrid powertrain, by comparing measured values of said operating parameters, with a second set of predefined reference ranges;
d) if at least one of said measured values is outside the second set of predefined reference ranges let the gearbox control unit act according to the predefined energy management law and conversely, if all measured values are within the second set of predefined reference ranges, then calculating the remaining time for changing to the second hybrid powertrain; and
e) modifying the energy management law, so that the score of the current engaged powertrain is higher than the score of the first hybrid powertrain and so that immediately after the remaining time has lapsed, the score of the second hybrid powertrain becomes the highest of all powertrains of the electric vehicle so it becomes the target powertrain.

The abovementioned method, according to the present invention, can avoid abrupt gear changes in the aftermath of the change from an electric traction mode to a hybrid traction mode, regardless of the particular driving circumstances of the vehicle. Even in those cases in which, for example, the hybrid vehicle is within an urban environment and the driver accelerates gently to reach the speed target of the urban speed limit, something which according to prior art traction mode change methods, would imply two very close changes of the hybrid powertrain.

To that end, the method according to the present invention modifies the "Energy Management Law" (LGE) of the hybrid vehicle so that, in those cases in which two abrupt powertrain changes are foreseen (and not decided yet by gearbox control unit) if a change to the hybrid traction mode occurs, then the vehicle is kept in the electric traction mode for an extended period of time and the changeover to the hybrid traction mode is delayed until it is time to change to the second hybrid powertrain, moment in which the second hybrid powertrain is directly engaged.

In the rest of the cases, the method of the present invention acts according to the usual procedure. That is, the gearbox control unit acts according to the predefined energy management law, without any external influence, as it currently happens in prior art methods.

Preferably, in the method according to the present invention, the step of evaluating the convenience of shifting -within a predetermined time interval- to a second hybrid powertrain, corresponding to a higher speed range than the first hybrid powertrain, also involves calculating the energetic costs of the current engaged powertrain, the first hybrid powertrain and the second hybrid powertrain, the energetic costs being calculated as the Hamiltonian of the corresponding powertrain. This step also comprises comparing the values of the Hamiltonian obtained for said powertrains.

Preferably, in the present invention, the first set of predefined reference ranges (employed by the method of the present invention for evaluating the convenience of changing to the hybrid traction mode), comprises reference ranges of at least one of the following operating parameters of the hybrid vehicle:
- vehicle speed;
- vehicle longitudinal acceleration;
- physical position of the accelerator pedal within its stroke;
- braking activation information;
- selected driver profile;
- selected energy management mode;
- energy equivalence factor, which establishes a link between fossil and mechanical energy in terms of consumption;
- target powertrain;
- list of current available powertrains;
- energy costs for selecting each powertrain;
- current engaged powertrain; and
- target powertrain.

Similarly, the second set of predefined reference ranges (employed by the method of the present invention for assessing the likelihood of occurrence of eventual abrupt powertrain changes once the vehicle shifts to the hybrid traction mode), comprises reference ranges of at least one of the following operating parameters of the hybrid vehicle:
- vehicle speed;
- vehicle longitudinal acceleration;
- physical position of the accelerator pedal within its stroke;
- braking activation information;
- selected driver profile;
- selected energy management mode;
- list of current available powertrains; and
- target powertrain.

A second object of the present invention refers to a computer readable storage medium comprising instructions which, when executed in a computer, cause the computer to carry out any of the abovementioned methods for smoothing the change from an electric traction mode to a hybrid traction mode, in a hybrid vehicle.

A third object of the present invention is a traction management unit for a hybrid vehicle comprising programmable logic means, said logic means being configured for carrying out any of the abovementioned methods for smoothing the change from an electric traction mode to a hybrid traction mode. In the context of the present invention, the programmable logic means can be, for example, a central processing unit (CPU).

### Brief description of the drawings

As a means for better understanding at least one embodiment of the present invention, the following set of drawings is introduced by way of schematic illustration and in a non-limitative manner.
Figure 1: is a flow chart that schematically illustrates one possible embodiment of a method for changing from an electric traction mode to a hybrid traction mode, in a hybrid vehicle, according to the present invention;
Figure 2A: is a table showing the evolution over time of various operating parameters of a hybrid vehicle, wherein the change between the electric and hybrid traction modes is managed according to a prior art method; and
Figure 2B: is a table showing the evolution over time of various operating parameters of a hybrid vehicle, wherein the change between the electric and hybrid traction modes is managed according to the method of the present invention shown in Fig. 1.

### Detailed description of the invention

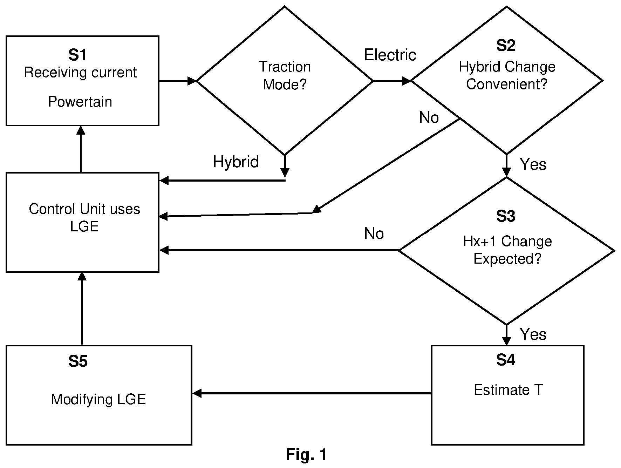

Figure 1 is a flow chart that schematically illustrates one possible embodiment of a method according to the present invention, intended to manage the change from an electric traction mode to a hybrid traction mode in a hybrid vehicle.

The hybrid vehicle comprises a combustion engine and one electric drive machine, forming a hybrid engine, which is connected -at least- to one tractor wheel of the vehicle through a plurality of reducer gears. It is also provided with a traction management unit which, in this particular embodiment of the invention, includes a central processing unit (CPU) with software instructions, for carrying out the method according to the present invention. However, other embodiments of method according to the invention are possible, based entirely on hardware or a combination of software and hardware.

In a first step of the method shown in Fig. 1, step S1, the traction management unit of the hybrid receives information on the current engaged powertrain and the target powertrain and also the availability of all powertrains of the hybrid vehicle. This last information could be provided in the form of a digital vector, having one digit per powertrain in the vehicle and in which, value "1" corresponds to the available powertrains and value "0" to the rest of unavailable powertrains.

Electric powertrain EVₓ corresponds to an electric traction mode in which the electric drive machine is connected to the tractor wheels, through the X^{th} electric reducer gear according to a predefined transmission ratio. Similarly, the hybrid powertrain Hₓ corresponds to the hybrid traction mode in which the combustion engine is engaged to the tractor wheels through the X^{th} hybrid-thermal reducer gear, according to a predefined transmission ratio. In this particular case, the electric drive machine is also engaged to the tractor wheels through a corresponding electric reducer gear. Finally, hybrid powertrain Hₓ₊₁ corresponds to the hybrid traction mode, immediately higher than Hₓ, in which the combustion engine is engaged to the tractor wheels through the (X+1)^{th} hybrid-thermal reducer gear.

If the current engaged powertrain corresponds to a hybrid traction mode, the gearbox control unit will then act according to the predefined energy management law, LGE. Conversely, if the current engaged powertrain corresponds to an electric mode, then step S2 takes place.

In step, S2, the traction management unit evaluates the convenience of changing from the electric traction to the hybrid traction mode. To that end, it measures current values of predefined operating parameters of the hybrid vehicle which, in this particular case, are the following: speed, longitudinal acceleration, physical position of the accelerator pedal (within its stroke), braking activation information, selected driver profile, selected energy management mode (which, in this particular embodiment of the invention includes values corresponding to the minimum and maximum authorized powers and torques), energetic costs associated to each traction modes (Hamiltonian method) and energy equivalence factor (which establishes a link between fossil and mechanical energy in terms of consumption). In this case, the braking activation information is a 1-bit signal, in which value "1" means that the brake pedal is being currently pressed and value "0" that no pressure on the brake pedal has been detected. In this particular case, the energetic cost of a particular powertrain is calculated as the Hamiltonian of said powertrain. In addition, step S2 also comprises comparing the values of the Hamiltonian obtained for each of the powertrains involved.

Then, the values of the predefined operating parameters obtained are compared with a first set of predefined reference ranges, which correspond to those intervals of values of the different parameters, for which the change from an electric traction mode to a hybrid mode is considered appropriate.

Consequently, if at least one of said measured values is outside the first set of predefined reference ranges, the gearbox control unit will then act normally, that is, according to the predefined energy management law, LGE.

Conversely, if all measured values of the relevant operating parameters are within the first set of predefined reference ranges, the change to the hybrid traction mode is considered appropriate, so the traction management unit takes proper measures to predict if a second abrupt gear change is expected in the hybrid traction mode (i.e., a change to a second hybrid powertrain, Hₓ₊₁, corresponding to a higher speed range than the first hybrid powertrain, Hₓ, within a short predetermined time interval). To that end, in step S3 the traction management unit compares the energetic cost per powertrain to identify the powertrain change to come and consolidates this identification with measured values of the corresponding operating parameters, with a second set of predefined reference ranges corresponding to the following operating parameters: current powertrain (EVₓ), vehicle speed, vehicle longitudinal acceleration, physical position of the accelerator pedal, braking activation information, selected driver profile, selected energy management mode and energy equivalence factor.

Thus, if at least one of said measured values of the relevant parameters is outside the second set of predefined reference ranges, the gearbox control unit will act normally, that is, according to the predefined energy management law, LGE.

Conversely, if all measured values are within the second set of predefined reference ranges, the traction management unit considers that a second subsequent abrupt gear change would occur by reading energetic cost of Hₓ and Hₓ₊₁ powertrains. Consequently, in order to avoid this undesirable operation of the traction system and in order to increase gear change smoothness, in step S4 the traction management unit calculates the time T remaining for changing to this second hybrid powertrain Hₓ₊₁ and keeps the hybrid vehicle in the electric traction mode, corresponding to the electric powertrain, EVₓ. Finally in the last step, S5, of the method according to the present invention shown in Fig.1, the energy management law, LGE, modifies its powertrain ranking, so that the score of the current engaged powertrain is higher than the score of the first hybrid powertrain Hₓ and so that immediately after the remaining time has lapsed, the score of the second hybrid powertrain Hₓ₊₁ becomes the highest of all powertrains of the electric vehicle so it becomes the target powertrain. As a consequence of this, the gearbox control unit sends instructions to change from the electric powertrain EVₓ, directly to the second hybrid powertrain, Hₓ₊₁, once said remaining time T has lapsed.

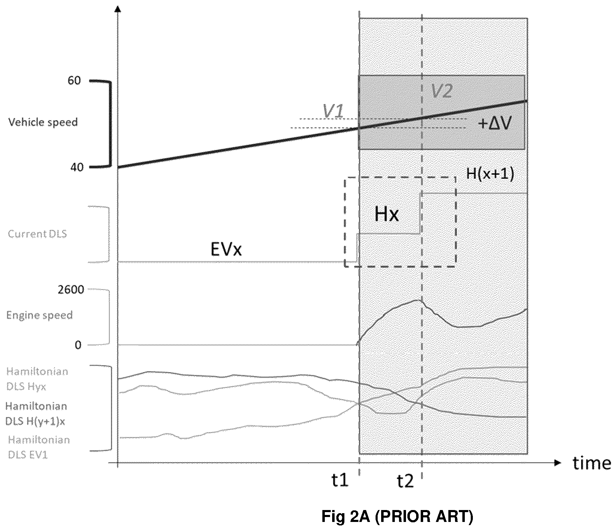

Fig 2A is a table showing the evolution over time of various operating parameters of a hybrid vehicle, wherein the change between the electric and hybrid traction modes is managed according to a prior art method. Said operating parameters are, in particular, vehicle speed, engine speed, current powertrain (DLS) and the Hamiltonian of the following powertrains DLS H_{yx}, DLS H_{(y+1)x}, and DLS EVₓ.

Prior art method shown in Fig 2A does not anticipate possible abrupt changes that may occur when switching to hybrid traction mode. Thus, as highlighted by the rectangle in dashed lines of this figure, upon reaching instant t1, the traction management unit decides to change from the electric powertrain EVₓ to the first hybrid powertrain Hₓ (since this traction mode change seems advisable in view of the corresponding operating parameters of the vehicle). As a result, if the driver keeps on accelerating gently once the change to the hybrid traction mode has already taken place (as happens in the case in shown in Fig 2A), then, in a short period of time (i.e., at instant t2) a new abrupt change to the second hybrid powertrain Hₓ₊₁ will take place.

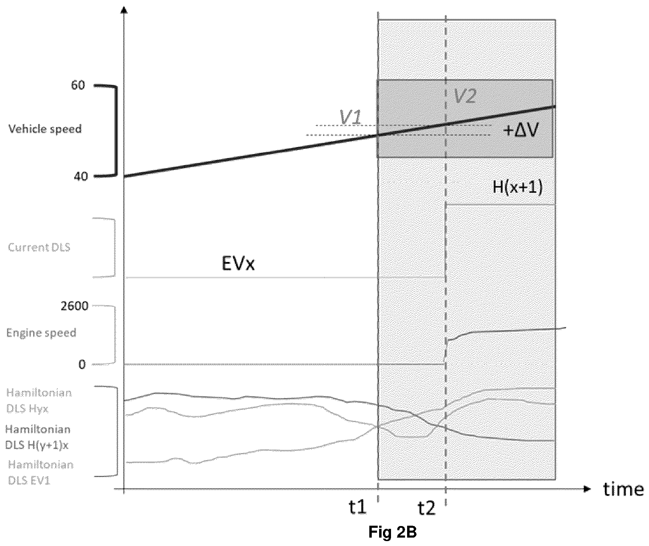

Finally, Fig 2B also shows the evolution over time of the operating parameters of a hybrid vehicle in the same case of traction mode change as Fig. 2A but, this time, regulated by a method according to the present invention. Thus, to avoid the abovementioned undesirable abrupt powertrain changes in the hybrid traction mode (i.e., EVₓ to Hₓ and subsequently Hₓ to Hₓ₊₁) as happened in the prior art technique method, the method according to the present invention illustrated in Fig. 2B keeps the vehicle in the electric powertrain EVₓ for an extended period of time, and shifts directly to the second hybrid powertrain, Hₓ₊₁, once said remaining time (in this case T=t2-t1) has lapsed.

As can be seen by comparing the Hamiltonians shown in both figures 2A and 2B, the change of traction mode is considerably smoother in the case of Fig. 2B.

## Claims

1. Method for smoothing the change from an electric traction mode to a hybrid traction mode in a hybrid vehicle provided with a gearbox control unit, the gearbox control unit being arranged for selecting a target powertrain for each instant, according to a predefined energy management law (LGE) which assigns a score to each powertrain of the hybrid vehicle for each instant, the method being **characterized in that** it comprises the steps of:
a) receiving (S1) the current engaged powertrain of the hybrid vehicle;
b) if the current engaged powertrain corresponds to a hybrid traction mode, then let the gearbox control unit act according to the predefined energy management law (LGE) and conversely, if the current engaged powertrain corresponds to an electric mode, then evaluating (S2) the convenience of changing to a hybrid traction mode associated to a first hybrid powertrain (Hₓ), by measuring current values of predefined operating parameters of the hybrid vehicle and comparing them with a first set of predefined reference ranges;
c) if at least one of said measured values is outside the first set of predefined reference ranges, then let the gearbox control unit act according to the predefined energy management law (LGE) and conversely, if all measured values are within the first set of predefined reference ranges, then evaluating the convenience (S3) of shifting -within a predetermined time interval- to a second hybrid powertrain (Hₓ₊₁), corresponding to a higher speed range than the first hybrid powertrain (Hₓ), by comparing measured values of said operating parameters, with a second set of predefined reference ranges;
d) if at least one of said measured values is outside the second set of predefined reference ranges, then let the gearbox control unit act according to the predefined energy management law and conversely, if all measured values are within the second set of predefined reference ranges, then calculating (S4) the remaining time (T) for changing to the second hybrid powertrain (Hₓ₊₁); and
e) modifying (S5) the energy management law, so that the score of the current engaged powertrain is higher than the score of the first hybrid powertrain (Hₓ) and so that immediately after the remaining time has lapsed, the score of the second hybrid powertrain (Hₓ₊₁) becomes the highest of all powertrains of the electric vehicle so it becomes the target powertrain.

2. Method according to claim 1, wherein the step (S3) of evaluating the convenience of shifting -within a predetermined time interval- to a second hybrid powertrain (Hₓ₊₁), corresponding to a higher speed range than the first hybrid powertrain (Hₓ), also involves calculating the energetic costs of the current engaged powertrain, the first hybrid powertrain (Hₓ) and the second hybrid powertrain (Hₓ₊₁), the energetic costs being calculated as the Hamiltonian of the corresponding powertrain, step (S3) also comprising comparing the values of the Hamiltonians obtained.

3. Method according to any previous claim, wherein the first set of predefined reference ranges, comprises reference ranges of at least one of the following operating parameters of the hybrid vehicle:
- vehicle speed;
- vehicle longitudinal acceleration;
- physical position of the accelerator pedal within its stroke;
- braking activation information;
- selected driver profile;
- selected energy management mode;
- energy equivalence factor, establishing a link between fossil consumption and mechanical energy consumption;
- list of current available powertrains;
- energy costs for selecting each powertrain;
- current engaged powertrain; and
- target powertrain.

4. Method according to any previous claim, wherein the second set of predefined reference ranges, comprises reference ranges of at least one of the following operating parameters of the hybrid vehicle:
- vehicle speed;
- vehicle longitudinal acceleration;
- physical position of the accelerator pedal within its stroke;
- braking activation information;
- selected driver profile;
- selected energy management mode;
- list of current available powertrains; and
- target powertrain.

5. Computer readable medium, **characterized in that** it comprises instructions that, when executed in a computer, cause the computer to carry out a method for smoothing the change from an electric traction mode to a hybrid traction mode in a hybrid vehicle, according to any of claims 1 to 4.

6. Traction management unit for a hybrid vehicle, said unit comprising programmable logic means configured for carrying out a method for smoothing the change from an electric traction mode to a hybrid traction mode, according to any of claims 1 to 4
